# EUROPÄISCHE PATENTSCHRIFT

(11) **EP 2 729 348 B1**
(45) Veröffentlichungstag und Bekanntmachung des Hinweises auf die Patenterteilung: **29.07.2015**
(21) Anmeldenummer: 12729633.3
(22) Anmeldetag: 26.06.2012
(51) Int. Cl.: B62D 21/15

(54) **BODENSTRUKTUR FÜR EIN FAHRZEUG**
UNDERSTRUCTURE FOR A VEHICLE
STRUCTURE DE PLANCHER POUR UN VÉHICULE

(30) Priorität: 08.07.2011 DE 102011051698
(43) Veröffentlichungstag der Anmeldung: 14.05.2014
(73) Patentinhaber: ThyssenKrupp Steel Europe AG, 47166 Duisburg (DE)
(72) Erfinder: PATBERG, Lothar, 47445 Moers (DE); KEUTZ, Andreas, 40477 Düsseldorf (DE); BREIDENBACH, Andreas, 50321 Brühl (DE)
(74) Vertreter: Cohausz & Florack
(86) Internationale Anmeldenummer: PCT/EP2012/062343
(87) Internationale Veröffentlichungsnummer: WO 2013/007515

(56) Entgegenhaltungen:
- WO-A1-2004/070860
- FR-A1- 2 942 764
- JP-A- 7 081 625
- US-A- 4 174 014

## Beschreibung

Die vorliegende Erfindung betrifft eine Bodenstruktur für ein Fahrzeug mit Aufnahmemitteln für mindestens zwei Energiespeichermodule, wobei die Aufnahmemittel mindestens zwei Längsträger und mindestens zwei Querträger aufweisen. Darüber hinaus betrifft die vorliegende Erfindung die Verwendung einer solchen Bodenstruktur in einem Kraftfahrzeug mit Elektro- und/oder Verbrennungsmotor.

Eine gattungsgemäße Bodenstruktur ist aus der FR 2 942 764 bekannt.

Bodenstrukturen für Kraftfahrzeuge der eingangs genannten Art sind aus dem Stand der Technik bekannt. Da die momentane durchschnittliche Energiedichte von Energiespeichermodulen wie Batterien wesentliche geringer ist als die von herkömmlichen Treibstoffen wie Benzin, benötigen Energiespeichermodule beispielsweise für den Antrieb von Elektrofahrzeugen wesentlich mehr Platz als Benzin. Um den Raum im Fahrzeug oder im Kofferraum aber nicht einschränken zu müssen, werden diese Energiespeichermodule häufig im Boden der Fahrzeuge untergebracht. Dies hat außerdem den Vorteil, dass der Schwerpunkt des Fahrzeugs nicht zu stark beeinflusst wird.

Aus dem Stand der Technik sind unterschiedliche Anordnungen von Batterien im Fahrzeugboden bekannt. Problematisch hierbei ist jedoch das Unfallverhalten der Fahrzeuge in Bezug auf die Energiespeichermodule. Bereits allein durch die Form von Fahrzeugen bedingt, verbleibt insbesondere bei Seitenaufprällen nur wenig Platz für einen Seitenaufprallschutz beispielsweise in Form eine Knautschzone oder anderen zusätzlichen Elementen, welche die Energiespeichermodule schützen. Ein effektiver Schutz der Energiespeichermodule ist jedoch unerlässlich, da Beschädigungen der Energiespeichermodule einerseits teure Austausch- und Reparaturkosten verursachen und andererseits Gefahren für die Umwelt mit sich bringen, wenn chemische Substanzen beispielsweise aus einer beschädigten Batterie nach einem Unfall in die Umwelt austreten.

Aus diesem Grund besteht das Bestreben nach einem effektiven Schutz der Energiespeichermodule in der Bodenstruktur von Kraftfahrzeugen, damit die genannten Nachteile vermieden werden können. Gleichzeitig muss beachtet werden, dass ein solcher verbesserter Schutz weder zulasten des Gewichts oder des Platzbedarfs eines Fahrzeugs gehen darf noch zusätzliche Kosten verursachen soll.

Hiervon ausgehend liegt der vorliegenden Erfindung wie technische Aufgabezugrunde, eine Bodenstruktur anzugeben, welche bei Unfällen, insbesondere bei Seitenaufprällen, den Schutz der Energiespeichermodule in Bodenstrukturen von Fahrzeugen verbessert, ohne das Gewicht oder die Kosten negativ zu beeinflussen.

Gemäß der ersten Lehre der Erfindung wird diese Aufgabe dadurch gelöst, dass die Aufnahmemittel mindestens eine Deformationszone mit definiertem Deformationsverhalten zwischen den Energiespeichermodulen aufweisen.

Durch das Vorsehen von Deformationszonen mit definiertem Deformationsverhalten zwischen den Energiespeichermodulen bzw. den Aufnahmebereichen für die Energiespeichermodule wird das Unfallverhalten wesentlich verbessert. Die Energie, die bei einem Aufprall auf die Bodenstruktur wirkt, muss auf diese Weise nicht ausschließlich in den Randbereichen beispielsweise durch Verformungen absorbiert werden, sondern kann zusätzlich zwischen den Energiespeichermodulen mittels Deformation gezielt absorbiert werden. Dadurch werden Beschädigungen der Energiespeichermodule effektiv vermieden.

Vorzugsweise werden Deformationszonen mit definiertem Deformationsverhalten zwischen allen Energiespeichermodulen vorgesehen. Dadurch wird ein maximaler Grad an Energieabsorption durch die Aufnahmemittel erreicht und somit ein optimales Unfallverhalten und ein optimaler Schutz aller Energiespeichermodule.

Dadurch, dass die Deformationszonen zwischen den Energiespeichermodulen vorgesehen sind, kann sich der Zwischenraum zwischen den Energiespeichermodulen im Falle eines Unfalls verkleinern, ohne dass die Energiespeichermodule beschädigt werden. Ein eventuelles Verformen der Aufnahmemittel kann so ebenfalls in den Zwischenräumen erfolgen, ohne die Energiespeichermodule zu beschädigen.

Unter Energiespeichermodulen werden insbesondere Batterien bzw. Akkumulatoren zur Speicherung elektrischer Energie, aber auch andere Formen der Energiespeicherung bzw. -umwandlung verstanden, wie beispielsweise Brennstoffzellen oder Wasserstoffzellen.

Unter einer Deformationszone mit definiertem Deformationsverhalten ist eine Zone zu verstehen, welche die auf die Bodenstruktur wirkenden Kräfte bevorzugt aufnehmen kann und die Energie beispielsweise eines Aufpralls vor allem im Vergleich zu übrigen Strukturelementen besonders gut aufnehmen und absorbieren kann.

Das definierte Deformationsverhalten kann zum Beispiel durch Materialschwächungen wie Anfaltsicken oder Materialaussparungen erreicht werden. Auch können Bereiche aus dünnerem oder unterschiedlichem, leichter verformbaren Material vorgesehen sein.

Als Aufnahmemittel für die Energiespeichermodule kommen beispielsweise Querträger, Längsträger und Seitenträger in Betracht. Insbesondere solche Träger, auf welchen die Energiespeichermodule aufliegen oder anliegen oder welche den Aufnahmebereich der Energiespeichermodule begrenzen. Es können aber auch separate Aufnahmekästen vorgesehen sein. Insbesondere können die Querträger und Längsträger einen Rahmen bilden, welcher die Energiespeichermodule im Wesentlich umgibt.

Dass die Deformationszonen mit definiertem Deformationsverhalten zwischen den Energiespeichermodulen angeordnet sein sollen, bedeutet, dass diese Zonen zum einen innerhalb des Zwischenraums vorgesehen sein können, welcher durch mindestens zwei beabstandete Energiespeichermodule entsteht. Zum anderen kann die Deformationszone aber auch in einer Verlängerung des Zwischenraums liegen. Das heißt, dass die Deformationszonen nicht unmittelbar zwischen den Energiespeichermodulen liegen muss, sondern beispielsweise auch oberhalb oder unterhalb des Zwischenraumes liegen können.

Die Querträger und Längsträger sind hierbei vorzugsweise als Hohlprofile ausgebildet. Auf diese Weise kann trotz geringstem Gewicht eine sehr gute Stabilität und somit ein sehr gutes Unfallverhalten der Bodenstruktur erzielt werden. Insbesondere durch fünf Querträger kann ein optimales Unfallverhalten erzielt werden. Diese sind vorzugsweise im Wesentlichen gleichmäßig in Längsrichtung verteilt.

Gemäß einer ersten Ausgestaltung der erfindungsgemäßen Bodenstruktur weist die Bodenstruktur mindestens einen, vorzugsweise für jedes Energiespeichermodul einen, Aufnahmekasten auf.

Die Aufnahmekästen stellen definierte Aufnahmebereiche für die einzelnen Energiespeichermodule zu Verfügung. Hierdurch wird das Unfallverhalten weiterhin verbessert, da die Aufnahmekästen die Energiespeichermodule einerseits zumindest teilweise umfassen und dadurch schützen und andererseits die Stabilität der Bodenstruktur insbesondere im Bereich der Energiespeichermodule erhöhen. Auch können die Aufnahmekästen als Aufnahmemittel Deformationszonen bereitstellen.

Ein Aufnahmekasten besteht vorzugsweise aus einem Bodenbereich und Seitenwänden und umgreift die Energiespeichermodule von unten. Auf diese Weise kann insbesondere ein einfacher Zugriff auf die Energiespeichermodule von unten ermöglicht werden, indem durch lösen der Aufnahmekästen von unten die Energiespeichermodule beliebig ausgetauscht werden können. Dadurch, dass für jedes Energiespeichermodul ein Aufnahmekasten vorgesehen ist, können auch einzelne Aufnahmekästen leer bleiben, und auch nur einzelne Energiespeichermodule in ihrem jeweiligen Aufnahmebereich durch den Aufnahmekasten fixiert werden. Durch die Aufnahmekästen ist schließlich auch bei einzelnen fehlenden Energiespeichermodulen die Stabilität der Bodenstruktur gewährleistet.

Grundsätzlich ist es jedoch auch denkbar, dass in einen Aufnahmekasten, mehr als ein Energiespeichermodul eingefügt wird. Dadurch kann das Gewicht und der Herstellungsaufwand und somit die Kosten für die Bodenstruktur reduziert werden.

Gemäß einer weiteren Ausgestaltung der erfindungsgemäßen Bodenplattform weist der mindestens eine Aufnahmekasten Prägungen zur Versteifung auf. Auf diese Weise kann die Stabilität und somit das Unfallverhalten und der Schutz der Energiespeichermodule weiterhin verbessert werden. Es ist insbesondere bevorzugt, wenn eine Kreuzversteifung im Bodenbereich des Aufnahmekastens vorgesehen ist. Grundsätzlich können alle oder auch nur einzelne Aufnahmekästen Prägungen zur Versteifung aufweisen.

Es ist weiterhin bevorzugt, wenn der mindestens eine Aufnahmekasten mit mindestens einem Querträger, vorzugsweise mittels mindestens eines Prägeteils, verbunden ist. Durch eine Verbindung eines Aufnahmekastens mit einem Querträger wird der Aufnahmekasten auf einfache Weise mit dem Rest der Aufnahmemittel der Bodenstruktur verbunden. Der Querträger erfüllt hierbei sowohl die Funktion einer Versteifung zur Verbesserung insbesondere des Seitenaufprallschutzes als auch die Funktion des Befestigungselements für die Aufnahmekästen. Eine solche Verbindung ist insbesondere dann vorteilhaft, wenn mehr als zwei Aufnahmekästen vorgesehen sind, welche sich in Längsrichtung der Bodenstruktur erstrecken. Die Aufnahmekästen können dann an einem oder mehreren Querträgern befestigt werden.

Zur Erhöhung der Stabilität der Bodenstruktur werden vorzugsweise die Aufnahmekästen an zwei Querträgern befestigt.

Es ist besonders vorteilhaft, wenn Deformationszonen an einem Querträger vorgesehen sind, an dem die Aufnahmekästen befestigt sind. Dadurch kann durch die Deformationszonen präzise bestimmt werden, wie sich die Zwischenräume zwischen den Energiespeichermodulen während eines Seitenaufpralls durch eine Krafteinwirkung im Wesentlichen entlang des Querträgers verkleinern.

Die Befestigung zwischen Aufnahmekasten und Querträger kann insbesondere durch Prägeteile bewerkstelligt werden. Diese können beispielsweise durch Schweißen mit den Aufnahmekästen verbunden werden und Aufnahmebereiche für Schraubverbindungen bereitstellen, um die Aufnahmekästen dann mit einem Querträger zu verschrauben. Grundsätzlich ist es aber auch möglich, andere Verbindungen durch Formschluss, Kraftschluss oder Materialschluss, wie Schweißen, Kleben, Verrasten oder ähnliches, vorzusehen.

Bevorzugt werden die Aufnahmekästen von der Unterseite mit der Bodenstruktur befestigt, insbesondere verschraubt. Dadurch kann ein leichter Zugriff auf die Energiespeichermodule auch im Fahrzeug erfolgen, indem die Aufnahmekästen von unten abgeschraubt werden.

Es ist weiterhin vorteilhaft, wenn mindestens zwei Aufnahmekästen vorgesehen sind und diese eine im Wesentlichen rechteckige Form aufweisen und parallel zu den Längsträgern verlaufen. Auf diese Weise werden Zwischenräume in Längsrichtung, also parallel zur Fahrtrichtung, zwischen den Energiespeichermodulen geschaffen, sodass Deformationszonen mit definiertem Deformationsverhalten für eine Energieabsorption in Querrichtung vorgesehen werden können. Da in Fahrtrichtung durch Knautschzonen im Motor- bzw. Heckbereich des Autos in der Regel genug Schutz für die Energiespeichermodule gegeben ist, wird durch die diese Anordnung der Aufnahmekästen und der Energiespeichermodule gezielt der Seitenaufprallschutz für die Energiespeichermodule verbessert.

Gemäß einer nächsten Ausführungsform der erfindungsgemäßen Bodenstruktur weisen die Kanten der Seitenwände der Aufnahmekästen Flansche auf. Hierdurch kann einerseits die Stabilität der Aufnahmekästen weiter gesteigert und somit das Unfallverhalten verbessert werden. Andererseits kann durch die Flanschbereiche auf einfache Weise eine Deformationszone mit definiertem Deformationsverhalten zwischen den Energiespeichermodulen bereitgestellt werden. Vorzugsweise sind die Flansche im Wesentlichen rechtwinkelig von der Seitenwand abgewinkelt. Dadurch können benachbarte Aufnahmekästen mit den Flanschen auf Stoß positioniert werden und so eine Deformationszone besonders effektiv bereitstellen.

Gemäß einer nächsten Ausführungsform weist die Bodenstruktur zusätzlich mindestens einen, vorzugsweise zwei, Schweller auf. Die parallel zu den Längsträgern verlaufenden Schweller erhöhen die Stabilität der Bodenstruktur und verbessern dadurch weiterhin das Unfallverhalten, insbesondere den Seitenaufprallschutz. Die Schweller sind vorzugsweise als Hohlprofile ausgebildet, um eine optimale Stabilität bei geringem Gewicht und geringen Materialkosten aufweisen zu können. Die Schweller werden beispielsweise durch Querträger mit der Bodenstruktur verbunden. Diese müssen nicht geradlinig verlaufen, sondern können auch geschwungen bzw. gekrümmt verlaufen.

Vorzugsweise wird die mindestens eine Deformationszone mit definiertem Deformationsverhalten zwischen den Energiespeichermodulen durch mindestens einen Querträger und/oder durch mindestens einen Aufnahmekasten und/oder durch mindestens einen Längsträger bereitgestellt. So werden vorhandene Aufnahmemittel der Bodenstruktur effektiv zur Verbesserung des Unfallverhaltens genutzt, ohne dass das Gewicht der Bodenstruktur erhöht werden muss oder kostenintensive zusätzliche Komponenten vorgesehen werden müssen.

Sind die Energiespeichermodule so angeordnet, dass ein Zwischenraum in Längsrichtung entsteht, weisen vorzugsweise die Querträger die Deformationszonen auf, während bei einem Zwischenraum in Querrichtung die Deformationszonen auch an den Längsträgern vorgesehen sein können. In jedem Fall können durch die Aufnahmekästen Deformationszonen unmittelbar zwischen den Energiespeichermodulen bereitgestellt werden. Gemäß der nächsten Ausgestaltung der erfindungsgemäßen Bodenstruktur weist mindestens ein Querträger im Bereich zwischen einem Längsträger und einem Schweller eine Deformationszone mit definiertem Deformationsverhalten auf. So wird ein zusätzlicher Bereich für eine definierte Deformation geschaffen. Eine zu hohe Belastung der Deformationszonen mit definiertem Deformationsverhalten zwischen den Energiespeichermodulen wird so vermieden, da bereits zumindest ein Teil der Energie eines Aufpralls durch die Deformationszone mit definierten Deformationsverhalten am Querträger im Bereich zwischen einem Längsträger und einem Schweller absorbiert werden kann. Auch diese Deformationszonen können insbesondere durch Anfaltsicken realisiert sein.

Zwischen einem Längsträger und einem Schweller ist wiederum so zu verstehen, dass die Deformationszone sowohl innerhalb des Zwischenraums vorgesehen sein kann, welcher durch Schweller und Längsträger entsteht. Die Deformationszone kann aber auch in einer Verlängerung des Zwischenraums liegen. Das heißt, dass die Deformationszone nicht unmittelbar zwischen Längsträger und Schweller liegen muss, sondern beispielsweise auch oberhalb oder unterhalb des Zwischenraumes liegen kann.

Bei einer weiteren vorteilhaften Ausführungsform weist die Bodenstruktur mindestens ein Deformationselement mit definiertem Deformationsverhalten zwischen Längsträger und Schweller auf. Durch ein Deformationselement kann die Stabilität und somit das Unfallverhalten bei Seitenaufprällen in hohem Maße verbessert werden. Zwar wird ein zusätzliches Element benötigt, jedoch kann hierdurch im Bereich zwischen Schweller und Längsträger in der Regel ein Großteil der Energie eines Aufpralls absorbiert werden. Ein solches Deformationselement mit definiertem Deformationsverhalten kann aus einem Hohlprofil hergestellt sein, welches Anfaltsicken aufweist, die sich bevorzugt deformieren. Auch kann das Deformationselement eine ziehharmonika-ähnliche Struktur aufweisen, welche bei einer Krafteinwirkung entlang des Deformationselements bevorzugt zusammengedrückt wird.

Gemäß einer nächsten Ausgestaltung sind die Schweller durch mindestens einen einstückig ausgebildeten Querträger verbunden. Dadurch wird eine hohe Stabilität der gesamten Bodenstruktur erreicht. Der einstückig ausgebildete Querträger kann insbesondere auch unmittelbar mit weiteren Längsträgern verbunden werden. Es ist insbesondere vorteilhaft, wenn ein einstückig ausgebildeter Querträger Deformationszonen mit definiertem Deformationsverhalten zwischen einem Längsträger und einem Schweller und/oder zwischen den Energiespeichermodulen aufweist. Auf diese Weise kann ein weiterhin verbessertes Unfallverhalten erzielt werden. Der mindestens eine einstücke Querträger ist vorzugsweise als Hohlprofile ausgebildet.

Ebenso können die Längsträger durch mindestens einen einstückig ausgebildeten Querträger verbunden sein. Dadurch wird eine hohe Steifigkeit der Bodenstruktur, insbesondere in Querrichtung, erreicht. Der einstückig ausgebildete Querträger kann insbesondere als Aufnahmemittel der Befestigung der Energiespeichermodule bzw. der Aufnahmekästen dienen. Der mindestens eine einstück ausgebildete Querträger ist vorzugsweise als Hohlprofile ausgebildet.

Bei einer weiteren Ausführungsform weist mindestens ein Längsträger ein vorderes und ein hinteres Längsträgerelement auf. Vorzugsweise weisen zwei Längsträger jeweils ein vorderes und ein hinteres Längsträgerelement auf. Durch das Vorsehen von Längsträgerelementen kann einerseits ein zusätzlicher Deformationsbereich in Längsrichtung geschaffen werden. Dadurch wird das Unfallverhalten insbesondere in Längsrichtung verbessert. Andererseits wird durch die separaten Längsträgerelemente ein modularer Aufbau der Bodenstruktur erzielt, sodass diese flexibler eingesetzt werden kann. Die Längsträgerelemente können beispielsweise die spezifisch an einen Fahrzeugtyp angepassten Bereiche bilden, sodass ein Längsträger für verschiedene Fahrzeugtypen genutzt werden kann.

Die Längsträgerelemente können über Verbindungsteile mit dem Längsträger verbunden sein. Durch die Verbindungsteile kann eine einfache, flexible, aber stabile Anbindung der Längsträgerelemente an die Längsträger erfolgen. Die Verbindungsteile können insbesondere durch Biegeteile realisiert werden. So kann eine komplexe Bauform zunächst in eine Platine geschnitten werden, welche anschließend an definierten Biegekanten umgebogen wird, um ein Profil bereitzustellen, welches Längsträger und Längsträgerelemente verbinden kann. Mit Biegeteilen kann auf eine besonders einfache Weise ein komplexes und stabiles Bauteil erzeugt werden.

Über die Verbindungsteile können des Weiteren auch Querträger mit der Bodenstruktur verbunden werden. Insbesondere ist es vorteilhaft wenn die die Schweller verbindenden Querträger mittels der Verbindungsteile an die Längsträger und/oder Längsträgerelemente angebunden werden. Auf diese Weise wird eine stabile Verbindung des sich mit dem Längsträger bzw. Längsträgerelement kreuzenden Querträgers erzielt.

Gemäß einer weiteren Ausgestaltung sind die Längsträgerelemente geometrisch im Wesentlichen identisch ausgebildet. Dies reduziert die Produktionskosten und den Aufwand der Herstellung, da nicht zwischen vorderen und hinteren oder linken und rechten Längsträgerelementen unterschieden werden muss.

Es ist weiterhin bevorzugt, wenn die Längsträgerelemente durch U-O-Umformen hergestellt sind. Hierdurch können leichte, aber stabile Längsträgerelemente hergestellt werden. Mittels herkömmlichen Schweißens oder Laserschweißens kann das Längsträgerelement zu einem geschlossenen Profil verschweißt werden. Auf diese Weise hergestellte Längsträger weisen trotz eines geringen Gewichts eine hohe Stabilität und Steifigkeit auf.

Schließlich ist gemäß einer zweiten Lehre der Erfindung die Verwendung einer erfindungsgemäßen Bodenstruktur in einem Kraftfahrzeug mit Elektro- und/oder Verbrennungsmotor vorteilhaft. So kann ein Fahrzeug mit Elektro- und/oder Verbrennungsmotor zur Verfügung gestellt werden, welches aufgrund der Bodenstruktur ein ausgezeichnetes Unfallverhalten aufweist. Von den Aufnahmemitteln der Bodenstruktur aufgenommene Energiespeichermodule werden effektiv vor Beschädigungen durch Aufprälle, insbesondere Seitenaufprälle, geschützt, ohne dass die Produktionskosten der Bodenstruktur und deren Gewicht negativ beeinflusst werden.

Im Folgenden wird die Erfindung anhand eines in einer Zeichnung dargestellten Ausführungsbeispiels näher erläutert. In der Zeichnung zeigen:
- Fig. 1: ein Ausführungsbeispiel einer erfindungsgemäßen Bodenstruktur für ein Fahrzeug ohne Energiespeichermodule in einer perspektivischen Ansicht von oben;
- Fig. 2a-c: ein Ausführungsbeispiel eines Aufnahmekastens in verschiedenen perspektivischen Ansichten;
- Fig. 3: die Bodenstruktur aus Fig. 1 mit drei in Aufnahmekästen positionierten Energiespeichermodulen in einer perspektivischen Ansicht;
- Fig. 4: die Bodenstruktur aus Fig. 3 mit nur einem Energiespeichermodul in einer perspektivischen Ansicht;
- Fig. 5: die Bodenstruktur aus Fig. 3 in einer perspektivischen Ansicht von unten;
- Fig. 6: die Bodenstruktur aus Fig. 3 mit zusätzlichen Deformationselementen in Draufsicht vor einem Seitenaufprall;
- Fig. 7: die Bodenstruktur aus Fig. 3 mit zusätzlichen. Deformationselementen in einer Frontalansicht vor einem Seitenaufprall;
- Fig. 8: die Bodenstruktur aus Fig. 3 mit zusätzlichen Deformationselementen in Draufsicht nach einem Seitenaufprall;
- Fig. 9a-b: die Bodenstruktur aus Fig. 3 mit zusätzlichen Deformationselementen in einer Querschnittsansicht während und nach dem Seitenaufprall;
- Fig.10a: ein Ausführungsbeispiel eines Platinenzuschnitts für ein Verbindungsteil in Form eines Biegeteils;
- Fig.10b-c: ein Ausführungsbeispiel eines Verbindungsteils in Form eines Biegeteils in verschiednen Perspektiven;
- Fig.11a-b: ein Ausführungsbeispiel eines vorderen Längsträgerelements in verschiedenen Perspektiven.

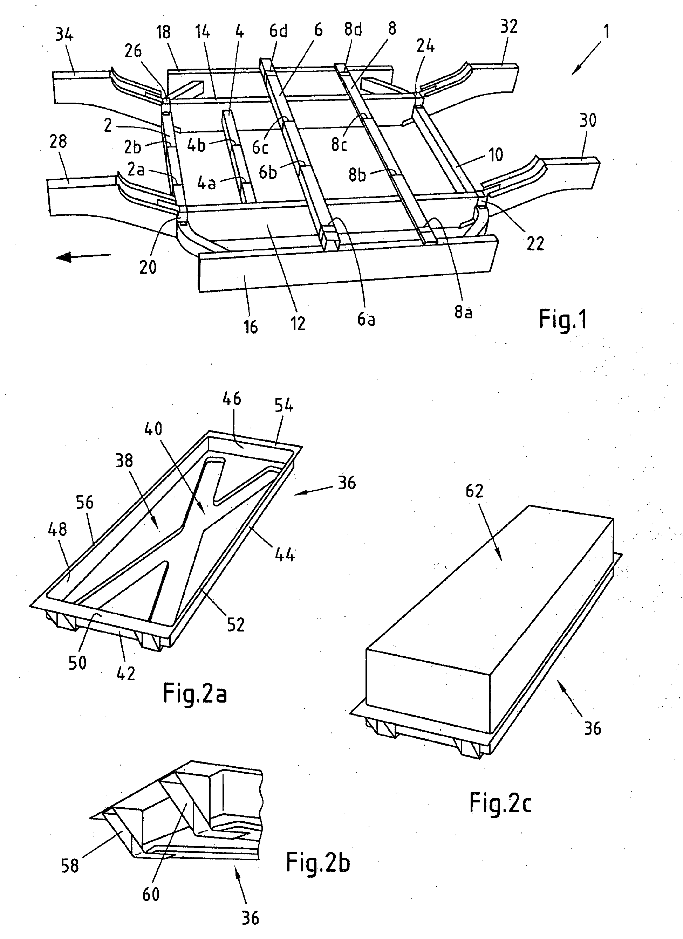

Fig. 1 zeigt ein Ausführungsbeispiel einer erfindungsgemäßen Bodenstruktur 1 für ein Fahrzeug ohne eingesetzte Energiespeichermodule 62, 62', 62" in einer perspektivischen Ansicht von oben. Die Fahrtrichtung des Kraftfahrzeugs bzw. Längsrichtung ist durch einen Pfeil dargestellt. Die Bodenstruktur 1 weist fünf Querträger 2, 4, 6, 8, 10 und zwei Längsträger 12, 14 auf. Der Querträger 4 verbindet die Längsträger 12, 14 miteinander und ist zwischen den Längsträgern 12, 14 angeordnet. Hierbei ist der Querträger 4 einstückig ausgebildet. Die Querträger 6, 8 sind oberhalb der Längsträger 12, 14 angeordnet und verbinden zwei Schweller 16, 18 miteinander. Die Schweller 16, 18 sind parallel zu den Längsträgern 12, 14 angeordnet und bieten zusätzlichen Schutz gegen Seitenaufprälle in Querrichtung. Die Querträger 6, 8 sind ebenfalls mit den Längsträgern 12, 14 verbunden. Es ist jedoch auch denkbar, dass die Querträger 6, 8 ohne eine Verbindung über den Längsträgern 12, 14 verlaufen.

Die Schweller 16, 18 sind zusätzlich über die Querträger 2, 10 miteinander verbunden. Gleichzeitig sind die Querträger 2, 10 mittels vier Verbindungsteilen in Form von Biegeteilen 20, 22, 24, 26 sowohl mit den Längsträgern 12, 14 als auch mit vorderen Längsträgerelementen 28, 34 und hinteren Längsträgerelementen 30, 32 verbunden. Die Querträger 2, 10 sind hierbei im Bereich zwischen den Längsträgern 12, 14 geradlinig ausgebildet und jeweils im Bereich zwischen Längsträger 12, 14 und Schweller 16, 18 geschwungen ausgebildet. Im Gegensatz zu den Querträgern 4, 6, 8 sind die Querträger 2, 10 mehrstückig ausgebildet, was komplexere Formen erlaubt. Hingegen kann mit den einstückig ausgebildeten Querträgern 4, 6, 8 ein hohes Maß an Steifigkeit erzielt werden. Die Längsträgerelemente 28, 30, 32, 34 sind hierbei zugunsten einer effektiven Produktion alle identisch ausgebildet.

Durch die dargestellten Verbindungen zwischen Querträgern 2, 4, 6, 8, 10, Längsträgern 12, 14 und Schwellern 16, 18 wird eine besonders stabile Bodenstruktur bereitgestellt, welche insbesondere den Bereich zwischen den Querträgern 2, 10 und den Längsträgern 12, 14 schützt.

Die in Fig. 1 gezeigten Quer- und Längsträger, Längsträgerelemente und Schweller sind als Hohlprofile ausgebildet, um eine ausreichende Stabilität bei geringem Gewicht zu gewährleisten. Vorteilhaft ist hier die Verwendung von Stählen, Magnesium- oder Aluminiumwerkstoffen.

In Fig. 1 ist des Weiteren erkennbar, dass die Querträger 2, 4, 6, 8 Deformationszonen mit definiertem Deformationsverhalten in Form von Anfaltsicken 2a, 2b, 4a, 4b, 6a, 6b, 6c, 6d, 8a, 8b, 8c, 8d aufweisen. Die Anfaltsicken 4a, 4b, 6b, 6c, 8b, 8c sind so angeordnet, dass sie zwischen einsetzbaren Energiespeichermodulen angeordnet sind. Die Anfaltsicken 6a, 6d, 8a, 8d bestehen in diesem Fall aus zwei nebeneinander liegenden Anfaltsicken. Es ist natürlich auch denkbar, dass nur einzelne Querträger auch nur einzelne Deformationszonen mit definiertem Deformationsverhalten aufweisen. Auch ist natürlich möglich, dass der Querträger 10 Deformationszonen mit definiertem Deformationsverhalten aufweist.

Fig. 2a zeigt nun ein Beispiel eines Aufnahmekastens 36 für das Energiespeichermodul 62. Der Aufnahmekasten 36 weist einen länglichen, rechteckigen Bodenbereich 38 auf, welcher an die Energiespeichermodule 62, 62', 62" angepasst ist. Zur Erhöhung der Stabilität ist der Bodenbereich 38 mit einer Prägung in Form einer Kreuzversteifung 40 versehen. Der Aufnahmebereich für ein Energiespeichermodul ist weiterhin durch im Wesentlichen rechtwinklig angeordnete Seitenwände 42, 44, 46, 48 begrenzt. Die Seitenwände 42, 44, 46, 48 weisen weiterhin Flansche 50, 52, 54, 56 auf, welche ebenfalls im Wesentlichen im rechten Winkel nach außen abgeklappt sind. Durch die Flansche 50, 52, 54, 56, insbesondere durch die Flansche 52, 56 an den Längskanten der Seitenwände 44, 48 des Aufnahmekastens 36 können Deformationszonen mit gezielten Deformationsverhalten bereitgestellt werden. Durch Größe, Länge, Winkel, Material der Flansche lässt sich das Deformationsverhalten bestimmen.

Fig. 2b zeigt den Aufnahmekasten 36 aus einer perspektivischen Ansicht von schräg unten. Prägeteile 58, 60 sind mit dem Aufnahmekasten 36 über Punktschweißungen verbunden. Mittels der Prägeteile 58, 60 können die Aufnahmekästen an Quer- oder Längsträgern der Bodenstruktur 1 beispielsweise mittels Verschraubungen fixiert werden.

Fig. 2c zeigt den Aufnahmekasten aus Fig. 2a mit eingelegtem Energiespeichermodul 62. Da der Aufnahmekasten 36 an die Form des Energiespeichermoduls 62 angepasst ist, wird die mögliche Bewegung des Energiespeichermoduls 62 eingeschränkt. Um ein Herausrutschen des Energiespeichermoduls 62 über die Seitenwände 42, 44, 46, 48 zu verhindern kann das Energiespeichermodul 62 mit dem Aufnahmekasten 36 zusätzlich verschraubt werden.

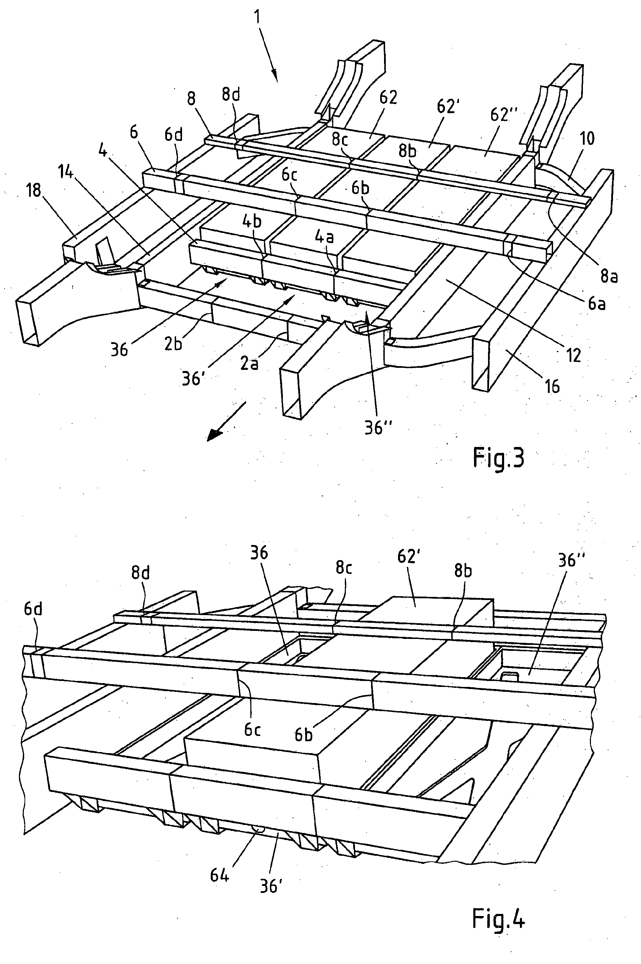

Fig. 3 zeigt die Bodenstruktur aus Fig. 1 mit drei in Aufnahmekästen positionierten Energiespeichermodulen in einer perspektivischen Ansicht. Die Fahrtrichtung des Kraftfahrzeugs bzw. Längsrichtung ist durch einen Pfeil dargestellt. Die Aufnahmekästen 36, 36', 36" sind über Prägeteile mit den Querträgern 4, 10 verbunden. In Querrichtung werden die Energiespeichermodule 62, 62', 62" zunächst durch die Schweller 16, 18 und die Längsträger 12, 14 vor Seitenaufprällen geschützt. In diesem Fall sind die drei Energiespeichermodule 62, 62', 62" im Wesentlichen parallel zur Fahrrichtung angeordnet, um durch Deformationszonen 2a, 2b, 4a, 4b, 6b, 6c, 8b, 8c mit definiertem Deformationsverhalten zwischen den Energiespeichermodulen 62, 62', 62" ein optimale Unfallverhalten zu erzeugen. Natürlich können auch mehr oder weniger als drei Energiespeichermodule 62, 62', 62" vorgesehen sein. Grundsätzlich ist auch eine Anordnung quer zur Fahrtrichtung denkbar, um einen verbesserten Schutz der Energiespeichermodule 62, 62', 62" in Fahrtrichtung zu erlangen. Auch eine Kombination aus Anordnungen quer und längs zur Fahrtrichtung ist denkbar.

Nach oben hin werden die Energiespeichermodule 62, 62', 62" durch die Querträger 6, 8 fixiert. Diese sind in diesem Fall jedoch nicht mit den Energiespeichermodule 62, 62', 62" fest verbunden.

Fig. 4 zeigt die Bodenstruktur 1 aus Fig. 3 mit nur einem Energiespeichermodul 62' in einer perspektivischen vergrößerten Ansicht. Selbst wenn weniger Energiespeichermodule als möglich in die Bodenstruktur eingesetzt sind, werden die eingesetzten Energiespeichermodule 62' aufgrund der Aufnahmekästen 36' ausreichend fixiert und beispielsweise vor einem Hin- und Herrutschen bewahrt.

Das Energiespeichermodul 62' weist eine Anschlussmöglichkeit 64 für elektrische Kabelverbindungen und Leitungen zur Kühlung auf. Die übrigen Energiespeichermodule 62, 62" weisen selbstverständlich ebenfalls solche oder ähnliche Anschlussmöglichkeiten auf. Besonders vorteilhaft kann die Leitungs- und Kabelführung zumindest teilweise durch den Innenraum der als Hohlprofile ausgebildeten Quer- und Längsträger 2, 4, 6, 8, 10, 12, 14 erfolgen.

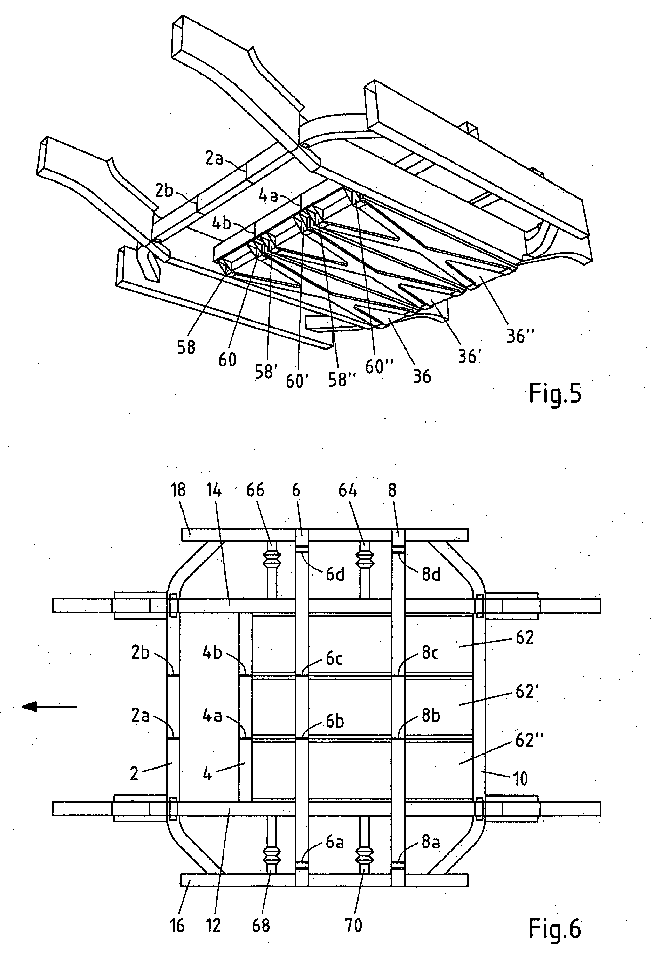

Fig. 5 zeigt die Bodenstruktur aus Fig. 3 in einer perspektivischen Ansicht von unten. Indem die Aufnahmekästen 36, 36', 36" mithilfe der Prägeteile 58, 60, 58', 60', 58", 60" von der Bodenstruktur gelöst werden, kann auf einfache Weise von unterhalb des Fahrzeugs auf die Energiespeichermodule 62, 62', 62" zugegriffen werden. So können die Energiespeichermodule 62, 62', 62" schnell und einfach einzeln ein- und ausgebaut werden.

Fig. 6 zeigt die Bodenstruktur 1 aus Fig. 3 mit zusätzlichen Deformationselementen 64, 66, 68, 70 in Draufsicht vor einem Seitenaufprall. Die Fahrtrichtung des Kraftfahrzeugs bzw. Längsrichtung ist durch einen Pfeil dargestellt. Die Deformationselemente 64, 66 sind zwischen dem Längsträger 14 und dem Schweller 18 angeordnet und an diesen befestigt, während die Deformationselemente 68, 70 zwischen dem Längsträger 12 und dem Schweller 16 angeordnet und an diesen befestigt sind. Durch die partielle ziehharmonika-artige Struktur der Deformationselemente 64, 66, 68, 70 weisen diese ein definiertes Deformationsverhalten auf und können Energie eines Aufpralls absorbieren.

In Fig. 6 ist des Weiteren erkennbar, dass die Querträger 4, 6, 8 Deformationszonen mit definiertem Deformationsverhalten in Form von Anfaltsicken 2a, 2b, 4a, 4b, 6a, 6b, 6c, 6d, 8a, 8b, 8c, 8d aufweisen. Die Anfaltsicken 4a, 6b, 8b sind zwischen den Energiespeichermodulen 62" , 62', die Anfaltsicken 4b, 6c, 8c sind zwischen den Energiespeichermodulen 62', 62 angeordnet. Die Anfaltsicken 6a und 8a sind wie die Deformationselemente 68, 70 zwischen dem Längsträger 12 und dem Schweller 16 angeordnet, während die Anfaltsicken 6d und 8d wie die Deformationselemente 64, 66 zwischen dem Längsträger 14 und dem Schweller 18 angeordnet sind. Zusätzlich können die Flansche der Aufnahmekästen 36, 36', 36" als Deformationszonen mit definiertem Deformationsverhalten dienen. Die Anfaltsicken 6a, 6d, 8a, 8d bestehen in diesem Fall aus zwei nebeneinander liegenden Anfaltsicken.

Im regulären Zustand, das heißt, ohne dass ein Unfall stattgefunden hat, sind die Anfaltsicken 4a, 4b, 6a, 6b, 6c, 6d, 8a, 8b, 8c, 8d und Deformationselemente 64, 66, 68, 70 nicht deformiert und die Energiespeichermodule 62, 62', 62" sind beabstandet.

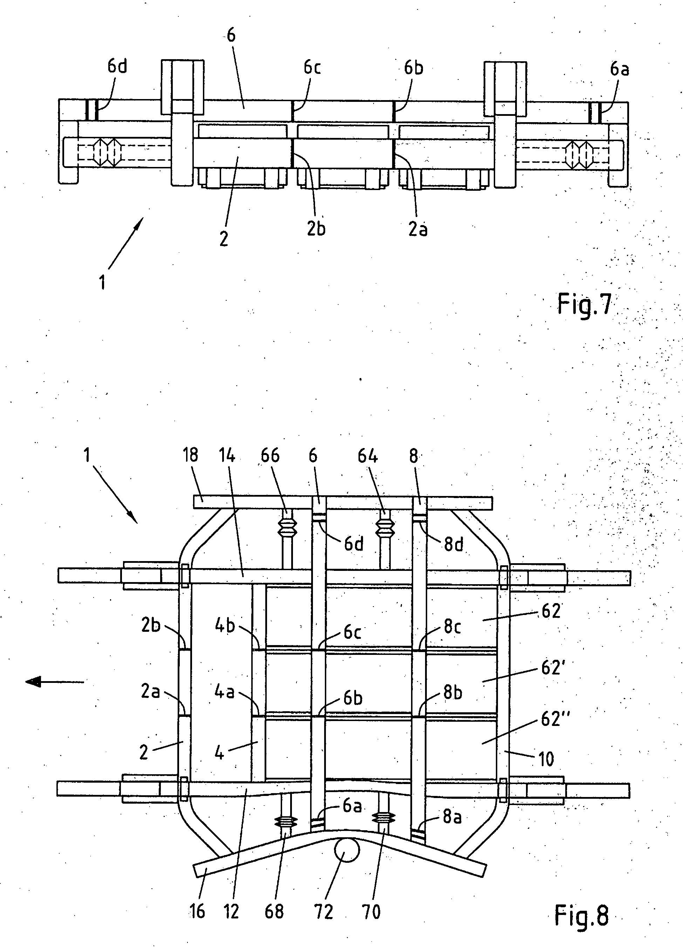

Fig. 7 zeigt die Bodenstruktur 1 aus Fig. 3 mit zusätzlichen Deformationselementen 64, 66, 68, 70 in einer Frontalansicht mit Blickrichtung entgegen der Fahrtrichtung ebenfalls vor einem Seitenaufprall. Es ist in dieser Perspektive zusätzlich erkennbar, dass auch der Querträger 2 Anfaltsicken 2a, 2b aufweist. Ebenso kann der Querträger 10 solche Anfaltsicken aufweisen.

Fig. 8 zeigt die Bodenstruktur 1 aus Fig. 3 mit zusätzlichen Deformationselementen 64, 66, 68, 70 in Draufsicht nach einem Seitenaufprall, welcher mittels eines Testobjekts in Form eines Pfahls 72 durchgeführt wurde. Durch den Aufprall wurde zunächst der Schweller 16 quer zur Fahrtrichtung deformiert. Ein Teil der Energie des Aufpralls kann so bereits durch die Verformung des Schwellers 16 absorbiert werden. Zusätzlich werden insbesondere die Querträger 6, 8 und die Deformationselemente 68, 70 entlang ihrer Längsachse deformiert bzw. gestaucht. Das Deformationsverhalten wird bei den Querträgern 6, 8 durch die Anfaltsicken 6a, 6b, 6c, 6d und 8a, 8b, 8c, 8d maßgeblich beeinflusst. In diesem Fall werden hauptsächlich die Anfaltsicken in der Nähe des Aufpralls, also des Schwellers 16, deformiert und eine Stauchung an definierten Stellen wird durch die Krafteinwirkung des Aufpralls hervorgerufen.

Auch die Deformationselemente 68, 70 deformieren sich hauptsächlich in einem definierten Bereich, welcher durch eine faltige Oberfläche ähnlich der einer Ziehharmonika gekennzeichnet ist. Die Kraft, welche quer auf den Längsträger 12 einwirkt, kann auf diese Weise bereits reduziert werden. Die Verformungen von Schweller 16, Längsträger 12 und Deformationselementen 68, 70 sind im Vergleich mit dem nicht deformierten Schweller 18, Längsträger 14 und den nicht deformierten Deformationselementen 64, 66 gut zu erkennen.

Es kann jedoch nicht ausgeschlossen werden, dass trotz der Verformung von Schweller 16, Längsträger 12, Querträgern 6, 8 und den Deformationselementen 68, 70 eine Kraft auf die Aufnahmemittel 2, 4, 6, 8, 10, 12, 14, 36, 36', 36" der Energiespeichermodule 62, 62', 62" im Bereich der Energiespeichermodule 62, 62', 62" ausgeübt wird. Um in diesem Fall eine Beschädigung der Energiespeichermodule 62, 62', 62" zu vermeiden, wandeln in diesem Fall die Aufnahmemittel insbesondere in Form der Querträger 4, 6, 8, 10 und der Aufnahmekästen 36', 36" Energie des Aufpralls in eine Verformung dieser Aufnahmemittel um. So erfahren zusätzlich die Querträger 4, 6, 8 in diesem Fall insbesondere die Querträger 6, 8 aufgrund der Deformationszonen mit definiertem Deformationsverhalten in Form der Anfaltsicken 4a, 6a, 8a und die Aufnahmekästen 36', 36" aufgrund der Deformationszonen mit definiertem Deformationsverhalten in Form der Flansche 52', 52" , 56" eine definierte Deformation zwischen den Energiespeichermodulen 62', 62". Es ist deutlich erkennbar, dass der Zwischenraum zwischen den Energiespeichermodulen 62' und 62" nun kleiner ist als derjenige zwischen den Energiespeichermodulen 62 und 62', welche weiter vom Aufprall entfernt sind.

So wird eine Beschädigung der Energiespeichermodule 62, 62', 62" durch die Deformation der Aufnahmenmittel 4, 6, 8, 36', 36" zwischen den Energiespeichermodulen 62, 62' vermieden.

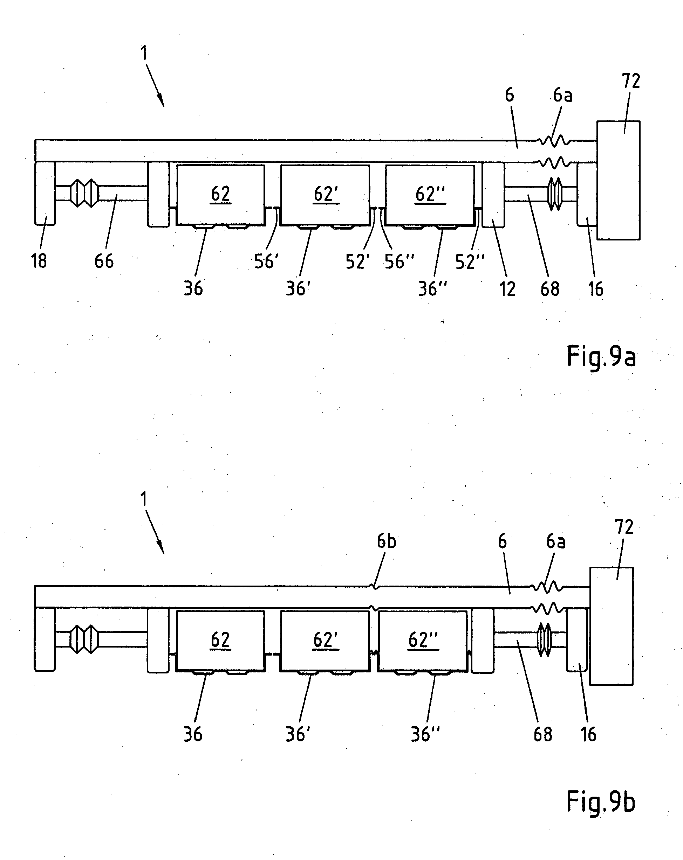

Fig. 9a zeigt die Bodenstruktur 1 aus Fig. 3 mit zusätzlichen Deformationselementen 64, 66, 68, 70 in einer Querschnittsansicht während dem Seitenaufprall. Durch den Aufprall des Pfahls 72 auf den Schweller 16 und den Querträger 6 wird zunächst der Schweller 16 quer zur Fahrtrichtung deformiert. Ein Teil der Energie des Aufpralls kann so bereits durch die Verformung des Schwellers 16 absorbiert werden. Wie auch in Fig. 8 zu erkennen ist, wird unter anderem der Querträger 6 und das Deformationselemente 68 entlang ihrer Längsachse deformiert bzw. gestaucht. Zu diesem Zeitpunkt des Aufpralls werden zunächst die Anfaltsicke 6a und das Deformationselement 68 in der Nähe des Aufpralls, also des Schwellers 16, deformiert und eine Stauchung an definierten Stellen wird durch die Krafteinwirkung des Aufpralls hervorgerufen. Die Verformungen des Querträgers 6 im Bereich des Schwellers 16 und des Deformationselements 68 sind im Vergleich mit dem nicht deformierten Teil des Querträgers 6 im Bereich des Schwellers 18 und des nicht deformierten Deformationselements 66 gut zu erkennen.

Ohne Deformationszonen mit definiertem Deformationsverhalten zwischen den Energiespeichermodulen würde nun bei weiterem Fortschreiten der Deformation eine Kraft auf die Energiespeichermodule 62, 62', 62" ausgeübt werden, durch welche die Energiespeichermodule 62, 62', 62" beschädigt würden.

Fig. 9 b zeigt die Bodenstruktur aus Fig. 3 mit zusätzlichen Deformationselementen in einer Querschnittsansicht nach dem Seitenaufprall. Die Deformationselemente und der Querträger 6 im Bereich der Anfaltsicke 6a kann nicht weiter deformiert werden. Aufgrund der Deformationszonen mit definiertem Deformationsverhalten zwischen den Energiespeichermodulen 62', 62" in Form der Anfaltsicke 6b und der Flansche 52', 52", 56" kann weitere Aufprallenergie abgebaut werden, ohne dass die Energiespeichermodule 62, 62', 62" beschädigt werden.

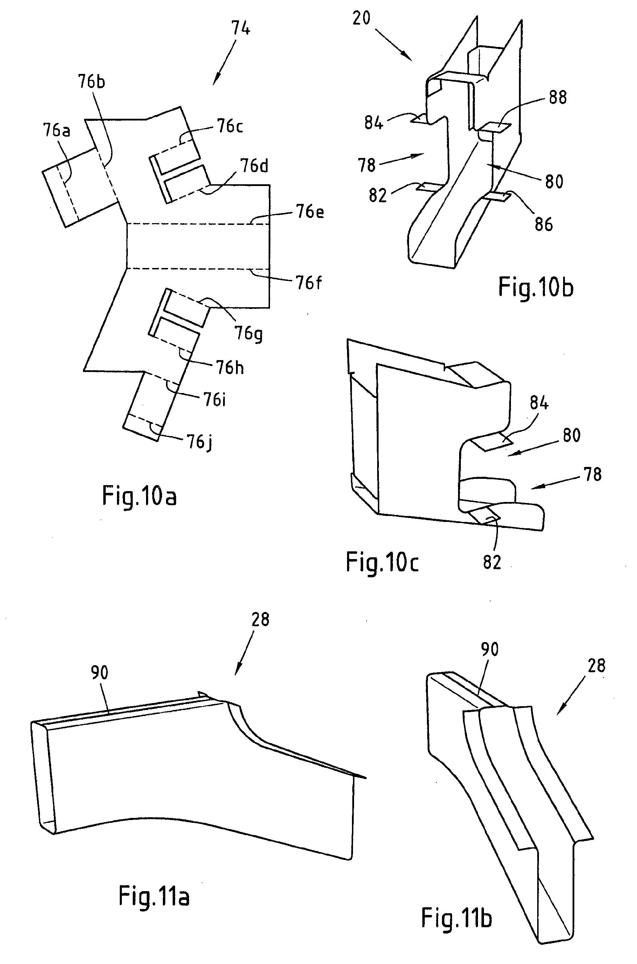

Fig.10a zeigt ein Beispiel eines Platinenzuschnitts 74 für ein Verbindungsteil in Form eines Biegeteils 20, 22, 24, 26. Ein solcher Platinenzuschnitt kann nahezu beliebig komplex zugeschnitten werden. Durch entsprechendes Biegen des Platinenzuschnitts 74 entlang der Biegekanten 76a bis 76j kann auf einfache Weise ein komplexes und stabiles Verbindungsteil in Form eines Biegeteils 20 hergestellt werden. Exemplarisch ist ein solches Biegeteil 20 für die Biegeteile 20, 22, 24, 26 in den Fig. 10b und 10c aus unterschiedlichen Perspektiven dargestellt. Mittels der Aussparungen 78, 80 und der Flansche 82, 84, 86, 88 kann ein solches Biegeteil die Längsträgerelemente 28, 30, 32, 34 mit den Längsträgern 12, 14 und den Querträgern 2, 10 verbinden. So kann mit wenig Material- und Produktionsressourcen eine stabile Verbindung am Kreuzungspunkt verschiedener Träger hergestellt und stabile Anbindungen von weiteren Elementen ermöglicht werden.

Schließlich zeigt Fig.11a-b ein Beispiel eines vorderen Längsträgerelements 28 in verschiedenen Perspektiven. Die Längsträgerelemente 28, 30, 32, 34 sind jedoch im Wesentlichen identisch ausgebildet, sodass das gezeigt Längsträgerelement repräsentativ für die Längsträgerelemente 28, 30, 32, 34 ist. Durch eine identische Ausbildung kann insbesondere die Produktion einer Bodenstruktur vereinfacht werden, ohne das Unfallverhalten insbesondere bei Frontal- und Heckaufprällen negativ zu beeinflussen. Durch die Verwendung von Hohlprofilen kann eine ausreichende Stabilität der Längsträgerelemente sichergestellt werden und durch die längliche Ausbildung eine Ausreichende Deformationszone bereitgestellt werden. Die Längsträgerelemente 28, 30, 32, 34 sind durch U-O umformen hergestellt, indem sie aus einer Platine durch biegen zu einem zumindest teilweise geschlossenen Hohlprofil gebogen werden. Durch eine zum Beispiel durch Laserschweißen hergestellte Schweißnaht 90 wird das Längsträgerelement 28 zu einem dauerhaft geschlossenen Hohlprofil.

## Patentansprüche

1. Bodenstruktur für ein Fahrzeug mit Aufnahmemitteln (2, 4, 6, 8, 10, 12, 14, 36, 36', 36") für mindestens zwei Energiespeichermodule (62, 62', 62"), wobei die Aufnahmemittel (2, 4, 6, 8, 10, 12, 14, 36, 36', 36") mindestens zwei Längsträger (12, 14) und mindestens zwei Querträger (2, 4, 6, 8, 10) aufweisen,
**dadurch gekennzeichnet, dass**
die Aufnahmemittel (2, 4, 6, 8, 10, 12, 14, 36, 36', 36") mindestens eine Deformationszone (4a, 4b, 6b, 6c, 8b, 8c) mit definiertem Deformationsverhalten zwischen den Energiespeichermodulen (62, 62', 62") aufweisen, wobei die mindestens eine Deformationszone (4a, 4b, 6b, 6c, 8b, 8c) durch mindestens einen Querträger (2, 4, 6, 8, 10) bereitgestellt wird.

2. Bodenstruktur nach Anspruch 1,
**dadurch gekennzeichnet, dass**
die Bodenstruktur (1) mindestens einen, vorzugsweise für jedes Energiespeichermodul (62, 62', 62") einen, Aufnahmekasten (36, 36', 36") aufweist.

3. Bodenstruktur nach Anspruch 2,
**dadurch gekennzeichnet, dass**
der mindestens eine Aufnahmekasten (36, 36', 36") Prägungen (40) zur Versteifung aufweist.

4. Bodenstruktur nach Anspruch 2 oder 3,
**dadurch gekennzeichnet, dass**
der mindestens eine Aufnahmekastenkasten (36, 36', 36") mit mindestens einem Querträger (2, 4, 6, 8, 10), vorzugsweise mittels mindestens eines Prägeteils (58, 60, 58', 60', 58", 60"), verbunden ist.

5. Bodenstruktur nach einem der Ansprüche 2 bis 4,
**dadurch gekennzeichnet, dass**
mindestens zwei Aufnahmekästen (36, 36', 36") vorgesehen sind und diese eine im Wesentlichen rechteckige Form aufweisen und parallel zu den Längsträgern (12, 14) verlaufen.

6. Bodenstruktur nach einem der Ansprüche 2 bis 5,
**dadurch gekennzeichnet, dass**
die Kanten der Seitenwände (42, 44, 46, 48) der Aufnahmekästen (36, 36', 36") Flansche (50, 52, 54, 56) aufweisen.

7. Bodenstruktur nach einem der Ansprüche 1 bis 6,
**dadurch gekennzeichnet, dass**
die Bodenstruktur (1) zusätzlich mindestens einen, vorzugsweise zwei Schweller (16, 18) aufweist.

8. Bodenstruktur nach einem der Ansprüche 1 bis 7,
**dadurch gekennzeichnet, dass**
weitere Deformationszonen (4a, 4b, 6b, 6c, 8b, 8c) mit definiertem Deformationsverhalten zwischen den Energiespeichermodulen (62, 62', 62") durch mindestens einen Aufnahmekasten (36, 36', 36") und/oder durch mindestens einen Längsträger (12, 14) bereitgestellt werden.

9. Bodenstruktur nach Anspruch 7 oder 8,
**dadurch gekennzeichnet, dass**
mindestens ein Querträger (2, 4, 6, 8, 10) im Bereich zwischen einem Längsträger (12, 14) und einem Schweller (16, 18) eine Deformationszone (6a, 6d, 8a, 8d, 64, 66, 68, 70) mit definiertem Deformationsverhalten auf.

10. Bodenstruktur nach einem der Ansprüche 7 bis 9,
**dadurch gekennzeichnet, dass**
die Bodenstruktur (1) mindestens ein Deformationselement (64, 66, 68, 70) mit definiertem Deformationsverhalten zwischen Längsträger (12, 14) und Schweller (16, 18) aufweist.

11. Bodenstruktur nach einem der Ansprüche 7 bis 10,
**dadurch gekennzeichnet, dass**
die Schweller (16, 18) durch mindestens einen einstückig ausgebildeten Querträger (4, 6, 8) verbunden sind.

12. Bodenstruktur nach einem der Ansprüche 1 bis 11,
**dadurch gekennzeichnet, dass**
die Längsträger (12, 14) durch mindestens einen einstückig ausgebildeten Querträger (4, 6, 8) verbunden sind.

13. Bodenstruktur nach einem der Ansprüche 1 bis 12,
**dadurch gekennzeichnet, dass**
mindestens ein Längsträger (12, 14) ein vorderes Längsträgerelement (28, 34) und ein hinteres Längsträgerelement (30, 32) aufweist.

14. Bodenstruktur nach Anspruch 13,
**dadurch gekennzeichnet, dass**
die Längsträgerelemente (28, 30, 32, 34) über Verbindungsteile (20, 22, 24, 26) mit dem Längsträger (12, 14) verbunden sind.

15. Bodenstruktur nach Anspruch 13 oder 14,
**dadurch gekennzeichnet, dass**
die Längsträgerelemente (28, 30, 32, 34) geometrisch im Wesentlichen identisch ausgebildet sind.

16. Bodenstruktur nach einem der Ansprüche 13 bis 15,
**dadurch gekennzeichnet, dass**
die Längsträgerelemente (28, 30, 32, 34) durch U-O-Umformen hergestellt sind.

17. Verwendung einer Bodenstruktur nach einem der Ansprüche 1 bis 16 in einem Kraftfahrzeug mit Elektro- und/oder Verbrennungsmotor.

## Claims

1. Floor structure for a vehicle with accommodating means (2, 4, 6, 8, 10,12,14, 36, 36', 36") for at least two energy storage modules (62, 62', 62"), wherein the accommodating means (2, 4, 6, 8, 10, 12, 14, 36, 36', 36") comprise at least two longitudinal members (12, 14) and at least two cross members (2,4, 6, 8,10), **characterised in that** the accommodating means (2,4, 6,8,10,12,14, 36, 36', 36") comprise at least one deformation zone (4a, 4b, 6b, 6c, 8b, 8c) with defined deformation behaviour between the energy storage modules (62, 62', 62"), wherein the at least one deformation zone (4a, 4b, 6b, 6c, 8b, 8c) is provided by at least one cross member (2, 4, 6, 8,10).

2. Floor structure according to claim 1, **characterised in that** the floor structure (1) comprises at least one, preferably for each energy storage module (62, 62', 62") one, accommodating box (36, 36', 36").

3. Floor structure according to claim 2, **characterised in that** the at least one accommodating box (36, 36', 36") comprises embossings (40) for stiffening purposes.

4. Floor structure according to claim 2 or 3, **characterised in that** the at least one accommodating box (36, 36', 36") is connected to at least one cross member (2, 4, 6, 8, 10), preferably by means of at least one embossed part (58, 60, 58', 60', 58", 60").

5. Floor structure according to any one of claims 2 to 4, **characterised in that** at least two accommodating boxes (36, 36', 36") are provided and these have a substantially rectangular shape and run parallel to the longitudinal members (12, 14).

6. Floor structure according to any one of claims 2 to 5, **characterised in that** the edges of the side walls (42, 44, 46, 48) of the accommodating boxes (36, 36', 36") have flanges (50, 52, 54, 56).

7. Floor structure according to any one of claims 1 to 6, **characterised in that** the floor structure (1) additionally comprises one, preferably two, sills (16,18).

8. Floor structure according to any one of claims 1 to 7, **characterised in that** further deformation zones (4a, 4b, 6b, 6c, 8b, 8c) with defined deformation behaviour between the energy storage modules (62, 62', 62") are provided by at least one accommodating box (36, 36', 36") and/or by at least one longitudinal member (12,14).

9. Floor structure according to claim 7 or 8, **characterised in that** at least one cross member (2,4, 6, 8, 10) in the region between a longitudinal member (12,14) and a sill (16, 18) comprises a deformation zone (6a, 6d, 8a, 8d, 64, 66, 68, 70) with defined deformation behaviour.

10. Floor structure according to any one of claims 7 to 9, **characterised in that** the floor structure (1) comprises at least one deformation element (64, 66, 68, 70) with defined deformation behaviour between the longitudinal members (12, 14) and sills (16,18).

11. Floor structure according to any one of claims 7 to 10, **characterised in that** the sills (16, 18) are connected by at least one cross member (4, 6, 8) formed in one piece.

12. Floor structure according to any one of claims 1 to 11, **characterised in that** the longitudinal members are connected by at least one cross member (4, 6, 8) formed in one piece.

13. Floor structure according to any one of claims 1 to 12, **characterised in that** at least one longitudinal member (12, 14) has a front longitudinal member element (28, 34) and a rear longitudinal member element (30, 32).

14. Floor structure according to claim 13, **characterised in that** the longitudinal member elements (28, 30, 32, 34) are connected via connecting parts (20, 22, 24, 26) to the longitudinal member (12,14).

15. Floor structure according to claim 13 or 14, **characterised in that** the longitudinal member elements (28, 30, 32, 34) are formed geometrically substantially identically.

16. Floor structure according to any one of claims 13 to 15, **characterised in that** the longitudinal member elements (28, 30, 32, 34) are produced by U-O-forming/shaping.

17. Use of a floor structure according to any one of claims 1 to 16 in a motor vehicle with an electric and/or internal combustion engine.

## Revendications

1. Structure de plancher pour un véhicule comportant des moyens de réceptacle (2, 4, 6, 8, 10, 12, 14, 36, 36', 36") pour au moins deux modules d'accumulateur d'énergie (62, 62', 62"), dans laquelle les moyens de réceptacle (2,4,6,8,10,12, 14, 36, 36', 36") présentent au moins deux longerons (12,14) et au moins deux traverses (2,4, 6,8,10), **caractérisée en ce que** les moyens de réceptacle (2,4,6, 8, 10,12, 14, 36, 36', 36") présentent au moins une zone de déformation (4a, 4b, 6b, 6c, 8b, 8c) avec un comportement de déformation défini entre les modules d'accumulateur d'énergie (62, 62', 62"), dans laquelle au moins une zone de déformation (4a, 4b, 6b, 6c, 88b, 8c) est fournie par au moins une traverse (2, 4, 6, 8, 10).

2. Structure de plancher selon la revendication 1, **caractérisée en ce que** la structure de plancher (1) présente au moins une, de préférence pour chaque module d'accumulateur d'énergie (62, 62', 62") une, caisse de réceptacle (36, 36', 36").

3. Structure de plancher selon la revendication 2, **caractérisée en ce que** au moins une caisse de réceptacle (36, 36', 36") présente des estampages (40) à des fins de raidissement.

4. Structure de plancher selon la revendication 2 ou 3, **caractérisée en ce que** au moins une caisse de réceptacle (36, 36', 36") est reliée à au moins une traverse (2,4, 6,8,10), de préférence au moyen d'au moins une pièce estampée (58, 60, 58', 60', 58", 60").

5. Structure de plancher selon une des revendications 2 à 4, **caractérisée en ce que** au moins deux caisses de réceptacle (36, 36', 36") sont prévues et celles-ci présentent essentiellement une forme rectangulaire et s'étendent parallèlement aux longerons (12,14).

6. Structure de plancher selon une des revendications 2 à 5, **caractérisée en ce que** les arêtes des parois latérales (42, 44, 46, 48) des caisses de réceptacles (36, 36', 36") présentent des brides (50, 52, 54, 56).

7. Structure de plancher selon une des revendications 1 à 6, **caractérisée en ce que** la structure de plancher (1) présente en outre au moins un, de préférence deux bas de caisse (16, 18).

8. Structure de plancher selon une des revendications 1 à 7, **caractérisée en ce que** d'autres zones de déformation (4a, 4b, 6b, 6c, 8b, 8c) avec un comportement de déformation défini sont fournis entre les modules d'accumulateur d'énergie (62, 62', 62") par au moins une caisse de réceptacle (36, 36', 36") et/ou par au moins un longeron (12, 14).

9. Structure de plancher selon la revendication 7 ou 8, **caractérisée en ce que** au moins une traverse (2,4,6, 8,10) présente dans la zone entre un longeron (12,14) et un bas de caisse (16,18) une zone de déformation (6a, 6d, 8a, 8d, 64, 66, 68, 70) avec un comportement de déformation défini.

10. Structure de plancher selon une des revendications 7 à 9, **caractérisée en ce que** la structure de plancher (1) présente au moins un élément de déformation (64, 66, 68, 70) avec un comportement de déformation défini entre le longeron (12, 14) et le bas de caisse (16,18).

11. Structure de plancher selon une des revendications 7 à 10, **caractérisée en ce que** les bas de caisse (16, 18) sont reliés par l'intermédiaire d'au moins une traverse (4, 6, 8) réalisée en un seul tenant.

12. Structure de plancher selon une des revendications 1 à 11, **caractérisée en ce que** les longerons (12, 14) sont reliés par l'intermédiaire d'au moins une traverse (4, 6, 8) réalisée en un seul tenant.

13. Structure de plancher selon une des revendications 1 à 12, **caractérisée en ce que** au moins une traverse (12, 14) présente un élément de traverse avant (28, 34) et un élément de traverse arrière (30, 32).

14. Structure de plancher selon la revendication 13, **caractérisée en ce que** les éléments de traverse (28, 30, 32, 34) sont reliés par l'intermédiaire de pièces de liaison (20, 22, 24, 26) à la traverse (12, 14).

15. Structure de plancher selon la revendication 13 ou 14, **caractérisée en ce que** les éléments de traverse (28, 30,32, 34) sont conçus de manière essentiellement identique géométriquement.

16. Structure de plancher selon une des revendications 13 à 15, **caractérisée en ce que** les éléments de traverse (28, 30, 32, 34) sont fabriquées par façonnage en U/0.

17. Utilisation d'une structure de plancher selon une des revendications 1 à 16 dans un véhicule à combustion interne avec moteur électrique et/ou à combustion interne.
